# EUROPÄISCHE PATENTSCHRIFT

(11) **EP 1 563 172 B1**
(45) Veröffentlichungstag und Bekanntmachung des Hinweises auf die Patenterteilung: **06.09.2006**
(21) Anmeldenummer: 03811355.1
(22) Anmeldetag: 25.10.2003
(51) Int. Cl.: F02B 71/00

(54) **ZWEITAKT-FREIFLUG-GEGENKOLBEN-BRENNKRAFTMASCHINE**
TWO-STROKE INTERNAL COMBUSTION ENGINE WITH FREE OPPOSED PISTONS
MOTEUR DEUX TEMPS A COMBUSTION INTERNE A PISTONS OPPOSES LIBRES

(30) Priorität: 20.11.2002 DE 10254037
(43) Veröffentlichungstag der Anmeldung: 17.08.2005
(73) Patentinhaber: FEV Motorentechnik GmbH, 52078 Aachen (DE)
(72) Erfinder: PISCHINGER, Franz, 52072 Aachen (DE); HOFBAUER, Peter, West Bloomfield, MI 48324-1648 (US)
(74) Vertreter: Maxton Langmaack & Partner
(86) Internationale Anmeldenummer: PCT/EP2003/011872
(87) Internationale Veröffentlichungsnummer: WO 2004/046521

(56) Entgegenhaltungen:
- EP-A- 0 224 142
- WO-A-00/01933
- DE-B- 1 049 150
- DE-C- 694 221
- GB-A- 872 739
- US-A- 4 385 597
- US-B1- 6 170 443
- PATENT ABSTRACTS OF JAPAN Bd. 0070, Nr. 63 (M-200), 16. März 1983 (1983-03-16) & JP 57 206733 A (YUUZOU TERAI), 18. Dezember 1982 (1982-12-18)

## Beschreibung

Aus US-B-6,170,443 ist als Antriebsmaschine eine Zweitakt-Gegenkolbenbrennkraftmaschine in Boxerbauart bekannt, die mit zwei gleichachsig hintereinander angeordneten Zylindern versehen ist, in denen jeweils ein gegenläufig zueinander bewegbares Kolbenpaar angeordnet ist. Die sich jeweils in gleicher Richtung bewegenden Kolben beider Kolbenpaare sind jeweils über einen Kurbelarm einer Kurbelwelle zwangsgeführt miteinander verbunden. Jedes Kolbenpaar begrenzt in seinem Zylinder einen Brennraum, so daß bei abwechselnder Befeuerung der Zylinder sich die beiden jeweils miteinander verbundenen Kolben beider Kolbenpaare gegenläufig hin und her bewegen und wobei die Bewegungsenergie von der Kurbelwelle zu Antriebszwecken abgegriffen wird. Die Kraftstoffzufuhr erfolgt durch Einspritzung in den Brennraum, wenn die beiden Kolben eines Kolbenpaares in dem zu befeuernden Zylinder sich im Bereich ihres oberen Totpunktes befinden. Der Betrieb und die Steuerung einer derartigen Brennkraftmaschine erfolgt in üblicher Weise, wobei als motorisches Verfahren das Selbstzündungsverfahren bevorzugt ist.

Da die Kolben in ihrer Bewegung über die Kurbelwelle zwangsgeführt sind, ergibt sich jeweils ein definiertes Verdichtungsverhältnis, so daß die für das Selbstzündungsverfahren notwendigen Verfahrensparameter Verdichtung, Temperatur, Kraftstoffart und Form der Kraftstoffeinspritzung praktisch fest vorgegeben sind. Da die Einspritzung jeweils in der oberen Totpunktlage erfolgt, muß für die Kraftstoffzufuhr eine Hochdruckeinspritzung vorgesehen werden.

Der Erfindung liegt nun die Aufgabe zugrunde, ausgehend von dem vorbekannten Gegenkolbenprinzip eine Brennkraftmaschine zu schaffen, die bei stabilem Betrieb eine breitere Einsatzmöglichkeit bietet.

Diese Aufgabe wird erfindungsgemäß mit einer Zwei-Zylinder-Zweitakt-Freiflug-Gegenkolben-Brennkraftmaschine, nachstehend Brennkraftmaschine genannt, mit den in Anspruch 1 angegebenen Merkmalen gelöst.

Da die beiden sich gegeneinander bewegenden Kolben eines Kolbenpaares miteinander nicht gekoppelt sind, ergibt sich kein definiertes, festes Verdichtungsverhältnis und damit auch keine definierte obere und untere Totpunktlage. Das Verdichtungsverhältnis ist innerhalb gewisser Grenzen variabel, wenn die Einlaßöffnungen und die Auslaßöffnungen entsprechend positioniert sind.

Ein wesentlicher Vorteil der erfindungsgemäßen Brennkraftmaschine besteht darin, daß wegen der Kraftstoffzufuhr zu den Zylindern jeweils im Bereich der Einlaßebene nur noch ein Niederdrucksystem einzusetzen ist. Die Mündung der Kraftstoffzufuhr, beispielsweise einer oder mehrere Einspritzdüsen, wird mit Beendigung des Lufteinlasses durch den sich in Richtung auf den "oberen Totpunkt" bewegenden Kolben abgedeckt, so daß die sich infolge der Gegenbewegung des anderen Kolbens dieses Kolbenpaares ergebende Druckerhöhung nicht mehr auf die Kraftstoffzufuhr auswirken kann.

Dies ermöglicht es, die Kraftstoffzufuhr in der unterschiedlichsten Weise vorzusehen, so beispielsweise in einen Luftzufuhrkanal außerhalb der Zylinder, wobei hier die Zufuhr über einen Vergaser üblicher Bauart oder aber auch über eine Einspritzung erfolgen kann.

Es ist aber auch möglich, den Kraftstoff in den Zylinderinnenraum zu spritzen, wobei entsprechend der Erfindung eine oder mehrere Einspritzdüsen im Bereich der Einlaßebene angeordnet sind. Auch hier werden die Mündungen der Einlaßdüse von dem sich in Richtung auf den "oberen Totpunkt" bewegenden Kolben abgedeckt. Hierbei ist es sogar möglich, die Einspritzdüsen auch noch - bezogen auf die Kompressionsbewegung des die Einlaßebene überfahrenden ersten Kolbens, - mit Abstand zur Lufteinlaßebene anzuordnen, da der Druckanstieg in einem ersten Bewegungsbereich des ersten Kolbens in Richtung auf den "oberen Totpunkt" noch verhältnismäßig gering ist, so daß auch noch in diesem Bereich mit Einspritzdrücken von maximal ... bar gearbeitet werden kann.

Der Vorteil besteht hierbei vor allem darin, daß der Einspritzzeitpunkt zurückverlegt werden kann und so die Einspritzung zu einem Zeitpunkt erfolgt, wenn durch den zweiten Kolben des Kolbenpaares die Auslaßschlitze bereits geschlossen sind, wobei auch hierbei der Kraftstoff entsprechend der gewählten Geometrie der Einlaßöffnungen und der hierdurch bewirkten Luftverwirbelung gut durchmischt wird.

Durch eine Sensorik zur Erfassung der relevanten Daten der Kolbenbewegungen mit einem entsprechenden Regler zur Regelung des Betriebs der Brennkraftmaschine lassen sich unterschiedliche Sollwerte eines maschinenbezogenen Bereichs für das Verdichtungsverhältnis vorgeben. Damit ist es aber auch möglich, eine konkrete Brennkraftmaschine durch eine entsprechende Sollwertvorgabe innerhalb des Bereichs für das Verdichtungsverhältnis mit unterschiedlichen Kraftstoffen zu betreiben, da sich die beiden miteinander verbundenen, gleichsinnig bewegenden Kolben, im übrigen in einem Zylinder gegenläufig bewegende Kolben, frei gegeneinander bewegen können, kann jeweils das "kritische" Verdichtungsverhältnis für die Selbstzündung des ausgewählten Kraftstoffs variiert werden.

Wird die Brennkraftmaschine zum Antrieb eines Energiewandlers, beispielsweise eines elektrischen Generators eingesetzt, dann besteht über die Sensorik in Verbindung mit der Regelung die Möglichkeit, durch die Erfassung der Kolbenposition im Zylinder sowie der Kolbenbewegung, insbesondere auch des Bewegungsablaufs in Abhängigkeit von der Zeit, bereits während eines Arbeitspiels einen Teil der Regeleingriffe über den Energiewandler zu führen, beispielsweise bei einem Generator diesen durch eine entsprechend getaktete Spannungsbeaufschlagung je nach Bedarf auch innerhalb eines Arbeitsspiels zeitweise als Motor zu betreiben, d. h. die Brennkraftmaschine antreiben, oder zeitweise als Generator zu betreiben, d. h. als Kolbenbremsen wirken zu lassen, so daß eine sehr schnelle feinfühlige Regelung des Betriebsverhaltens und damit ein stabiler Betrieb möglich ist, obwohl die Bewegung jeweils der beiden Kolben eines Kolbenpaares nicht zwangsgeführt ist, wie dies bei einer Zwangsführung über die Kurbelwelle der Fall ist.

Weitere Ausgestaltungen und Vorteile der Erfindung sind in den Unteransprüchen und in der nachfolgenden Beschreibung eines Ausführungsbeispieles angegeben. Die schematischen Zeichnungen zeigen:
- Fig. 1: schematisch eine Brennkraftmaschine der erfindungsgemäßen Art als Antriebssatz mit einem anzutreibenden Energiewandler,
- Fig. 2.: einen Zylinder im Expansionshub,
- Fig. 3: die Gaswechselvorgänge im unteren Totpunktbereich,
- Fig. 4: den Gasdurchfluß im Zylinder kurz vor Ende des Spülvorganges,
- Fig. 5: den Zylinder im Kompressionshub,
- Fig. 6: schematische den Gasdurchfluß in zwei in einer Mischeinrichtung zusammengeführten Abgasleitung,
- Fig. 7: eine Kolbenbrennkraftmaschine gem. Fig. 1 mit geregeltem 3-Wege-Katalysator,
- Fig. 8: die Kolbenbrennkraftmaschine gem. Fig. 1 mit einer aus Entstickungskatalysator und Oxidationskatalysator gebildeten Katalysatoreinheit.

Die dargestellte Brennkraftmaschine besteht im wesentlichen aus zwei in einer Achse hintereinander angeordneten Zylindern 1 und 2, in denen jeweils ein Kolbenpaar 3, mit den Kolben 3.1 und 3.2 einerseits und ein Kolbenpaar 4, mit den Kolben 4.1 und 4.2 andererseits gegenläufig hin und her bewegbar geführt ist. Die Kolben 3.1 und 4.2 sind über eine Koppel 5 ebenso wie die Kolben 3.2 und 4.1 über eine Koppel 6 fest miteinander verbunden. Die Kolben 3.1 und 4.2 einerseits und die Kolben 3.2 und 4.1 andererseits bewegen sich jeweils gleichsinnig, die Kolben 3.1 und 3.2 bzw. 4.1 und 4.2 eines Kolbenpaares bewegen sich jedoch jeweils gegenläufig zueinander.

Die Koppeln 5 und 6 übertragen ihre Bewegungsenergie auf einen Energiewandler 7. Der Energiewandler kann ein entsprechend ausgelegtes Getriebe mit nachgeschalteter Arbeitsmaschine sein aber auch durch ein System gebildet werden, das die Bewegungsenergie der Koppeln 5 und 6 unmittelbar in Energie umsetzt, beispielsweise durch einen elektrischen Generator, insbesondere einen Lineargenerator.

Jedes Kolbenpaar 3 bzw. 4 begrenzt einen Brennraum. Im Ausführungsbeispiel ist die Brennkraftmaschine im Betrieb dargestellt und zwar nach Zündung eines Kraftstoff-Luft-Gemisches zu Beginn des Expansionshubes im Zylinder 1, wobei die beiden Kolben 3.1 und 3.2 durch das Gasdruck auseinandergedrückt werden, während im Zylinder 2 die beiden Kolben 4.1 und 4.2 sich entsprechend aufeinander zubewegen.

Für den Ladungswechsel weist der Zylinder 1 und der Zylinder 2 jeweils wenigstens eine Reihe von auf den Umfang verteilten, eine Einlaßebene 8 für den Zylinder 1 und eine Einlaßebene 9 für den Zylinder 2 bildende Einlaßöffnungen auf, die mit einer Luftzufuhreinrichtung 10 bzw. 11 in Verbindung stehen. Bei dem dargestellten Ausführungsbeispiel sind jeweils für die Einlaßebenen 8 bzw. 9 zwei Reihen 8.1, 8.2 bzw. 9.1, 9.2 mit Einlaßöffnungen vorgesehen. Die jeweils ersten Kolben 3.1 bzw. 4.1 der beiden Kolbenpaare überfahren im Betrieb öffnend und schließend die zugehörige Einlaßebene.

Bei dem dargestellten Ausführungsbeispiel weist die Luftzufuhreinrichtung 10 bzw. 11 eine Kanalanordnung in Form eines die Einlaßebene 8 bzw. 9 der Zylinder außen umgreifenden Ringkanals auf, der mit einem Verdichter, beispielsweise einem Abgasturboladers mit Lader 12 und Abgasturbine 13 verbunden ist.

Jedes Kolbenpaar 3 bzw. 4 begrenzt zwischen sich einen Brennraum. Die Kraftstoffzufuhr erfolgt bei dem dargestellten Ausführungsbeispiel durch eine Direkteinspritzung mittels steuerbarer Einspritzdüsen 16, 17, die jeweils im Bereich der Einlaßebene 8 bzw. 9 des betreffenden Zylinders ausmünden. Wie die Zeichnung erkennen läßt, sind während des Expansionshubes im Zylinder 1 die Ausmündungen der Kraftstoffeinspritzdüsen durch den Kolben 3.1 abgedeckt, während sie im Zylinder 2 solange freiliegen, bis der Kolben 4.1 über die Koppel 6 vom den Kolben 3.2 über die Ausmündung der Kraftstoffeinspritzdüse 17 geschoben worden ist. Hierbei kann die Anordnung von mehreren Einspritzdüsen 16, 17 je Zylinder zweckmäßig sein.

Jeweils an dem der Einlaßebene 8 bzw. 9 abgekehrten Ende des Zylinders 1 bzw. 2 sind mehrere auf den Umfang verteilte Auslaßöffnungen 18 bzw. 19 vorgesehen, die in einer Auslaßkanalanordnung 20 bzw. 21 ausmünden, die mit Abgasturbine 13 des Abgasturboladers in Verbindung stehen.

Aufgrund des Expansionshubes im Zylinder 1 bewegt sich der Kolben 4.1 in Richtung des Pfeiles A, während sich der Kolben 4.2 entsprechend in Richtung des Pfeiles B bewegt, so daß nach einem entsprechenden Hubweg der Kolben 4.2 die Auslaßschlitze im Zylinder 2 schließt und so das im Zylinder 2 befindliche Kraftstoff-Luft-Gemisch bis auf das vorgegebene "kritische" Verdichtungsverhältnis komprimiert wird und der Selbstzündungsvorgang eintritt. Die Bewegung der Kolben kehrt sich dann entsprechend um.

Zur Stabilisierung des Betriebes und auch zur Regelung der Kraftstoffzufuhr proportional zur Leistungsabnahme des Energiewandler 7 durch einen Verbraucher (Pfeil 24), ist ein Regler 25 vorgesehen, der mit Sensoren 26.1 und 26.2 in Verbindung steht, über die die Bewegung der beiden Kolben 3.1 und 3.2 des Kolbenpaares 3 sowohl hinsichtlich ihrer jeweiligen Position, bezogen auf den Hubweg, der Bewegungsverlauf in Abhängigkeit von der Zeit, der Bewegungsablauf über den Hubweg und/oder auch die Geschwindigkeit über den Hubweg erfaßt wird.

Über die Erfassung der Kolbenposition lassen sich dann die Einspritzdüsen 16 und 17 hinsichtlich des Einspritzzeitpunktes ansteuern. Die Erfassung der Kolbenposition gibt aber auch Auskunft über das sich jeweils einstellende Verdichtungsverhältnis, das unmittelbar abhängig ist vom Abstand der beiden Kolben eines Kolbenpaares. Über eine Erhöhung oder Verminderung der Kraftstoffzufuhr kann zusätzlich zu der über den Verbraucher vom Energiewandler abgeforderten und über den Kraftstoff zuzuführenden Energie unmittelbar Einfluß auf das tatsächliche Verdichtungsverhältnis genommen werden.

Die Positionserfassung der Kolben des Kolbenpaares 3 am Zylinder 1 gilt entsprechend auch für die Position der Kolben des Kolbenpaares 4 im Zylinder 2. Ergibt sich während des Betriebes über die Positionserfassung, daß beispielsweise das Verdichtungsverhältnis im befeuerten Zylinder, beispielsweise dem Zylinder 1, gerade ausreichend war, um eine Selbstzündung noch zu bewirken, dann kann über den Regler schon für die Kraftstoffeinspritzung in den Zylinder 2 entsprechend mehr Kraftstoff zugeführt werden, so daß bei nächsten, durch den Zylinder 2 erfolgenden Arbeitstakt im Zylinder 1 ein höheres Verdichtungsverhältnis sich ergibt.

Aufgrund der Anordnung der Lufteinlaßöffnungen 8, 9 an einem Ende und der Auslaßöffnungen 18, 19 jeweils am anderen Ende eines Zylinders ergibt sich in Verbindung mit der Kolbenbewegung für den sogenannten Spülvorgang eine vorteilhafte Längsdurchströmung. Der jeweils die Einlaßöffnungen überfahrende erste Kolben 3.1 bzw. 4.1 eines Kolbenpaares gibt im "unteren Totpunkt" die Einlaßöffnungen der zugehörigen Einlaßebene 8 bzw. 9 frei, so daß unter der Einwirkung des Ladedruckes die Frischluft in den Zylinder einströmt und durch einfache Volumenverdrängung die Abgase aus den gleichzeitig geöffneten Auslaßöffnungen 18 bzw. 19 zunächst ausschiebt.

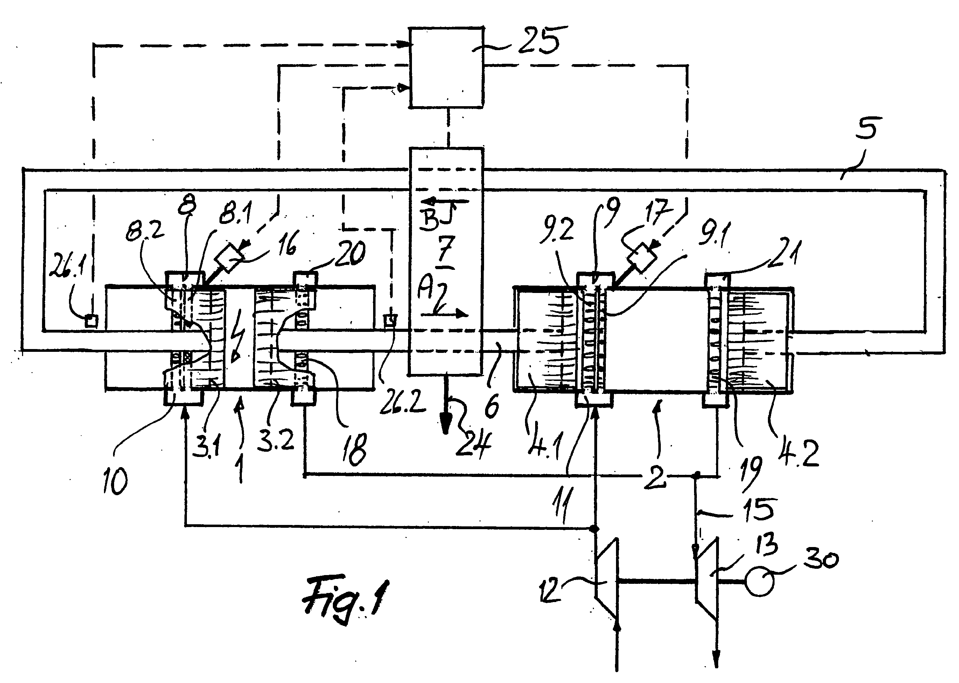

Bei der in Fig. 1 dargestellten Ausführungsform mit zwei jeweils eine Einlaßebene 8 bzw. 9 bildenden Reihen von Einlaßöffnungen 8.1, 8.2 bzw. 9.1, 9.2 beginnt der Spülvorgang bereits dann, wenn der erste Kolben des betreffenden Kolbenpaares sich noch in der durch den Expansionshub bewirkten Rückbewegung befindet. Da die Ladeluft nicht eingesaugt sondern über den Lader 12 unter Druck eingepreßt wird, wird durch die einströmende Frischluft das Abgas bereits aus dem Bereich der Einlaßebene verdrängt. Bei weiterer Bewegung des ersten Kolben eines Kolbenpaares in Richtung "unterer Totpunkt" wird dann auch die zweite oder, sofern vorhanden, jede weitere Reihe von Einlaßöffnungen freigegeben, durch die ebenfalls entsprechend dem vorgegebenen Ladedruck Frischluft in einer solchen Menge einströmt, daß das Abgas vollständig aus dem Zylinderinnenraum ausgespült ist, bevor bei der Rückbewegung der beiden Kolben die Einlaßöffnungen die Auslaßöffnungen wieder verschlossen werden.

Da die Einlaßöffnungen der Einlaßebenen 8 bzw. 9 aufgrund der endlichen Dicke der Zylinderwandung Kanäle bilden, ist es möglich, durch eine Winkelausrichtung beispielsweise der ersten Reihe der Einlaßöffnungen 8.1 eine tangentiale Einströmung der Luft zu bewirken, so daß sich im Zylinderraum ein Luftwirbel ausbildet. Die zweite Reihe kann radial ausgerichtete Einlaßöffnungen 8.2 aufweisen, so daß auch der Kernbereich des Brennraums zuverlässig mit Frischluft gefüllt und das Abgas über den gesamten Zylinderquerschnitt in Richtung auf die Auslaßschlitze ausgespült wird.

Da, wie vorstehend bereits beschrieben, die Einspritzöffnungen der Einspritzdüsen 16, 17 bei der Kolbenbewegung des jeweils ersten Kolbens in Richtung auf den "oberen Totpunkt" noch bei sehr geringer Verdichtung gegenüber dem Brennraum abgedeckt werden, sind nicht nur die Einspritzöffnungen der Einspritzventile vor den heißen Brenngasen geschützt sondern zugleich auch gegenüber dem ansteigenden Druck im Brennraum abgedeckt, so daß mit einer Niederdruckeinspritzanlage gearbeitet werden kann. Hierbei ist es möglich, jeweils die Einspritzdüsen durchaus in einem größeren Abstand zu der zugehörigen ersten Reihe von Einlaßöffnungen 8.1 bzw. 9.1 anzuordnen, so daß mit größerem Abstand zum ersten Kolben 3.1 bzw. 4.1 der Kraftstoff vorzugsweise gegen den Kolbenboden in Richtung auf die Einlaßebene eingespritzt werden kann und aufgrund der starken Verwirbelung der noch unter Druck erfolgenden Einlaßströmungen intensiv durchmischt wird. Eine intensive Vermischung ist insbesondere dadurch gegeben, daß beim Expansionshub in Richtung auf den "unteren Totpunkt" die beispielsweise tangential einmündenden, vom ersten Kolben als erstes freigegebene Einlaßöffnungen beim Kompressionshub des ersten Kolbens zuletzt verschlossen werden, so daß während der "Öffnungszeit" die Wirbelbewegung aufrechterhalten bleibt.

Zweckmäßig kann es auch sein, die Mündungen der Einspritzdüsen 16, 17 jeweils in eine der Lufteintrittsöffnungen ausmünden zu lassen, so daß der Kraftstoff "luftgestützt" in den Brennraum eingeführt wird. Die Kraftstoffzufuhr kann entsprechend gesteuert durch Lufteintrittsöffnungen verschiedener Einlaßebenen erfolgen.

Die Anordnung kann auch in der Weise abgewandelt werden, daß beispielsweise eine Kraftstoffgrundlast jeweils durch Einspritzen oder über einen Vergaser der Kanalanordnung 10 bzw. 11 zugeführt wird und daß nur noch zur "Feinregelung" über eine Direkteinspritzung in den Brennraum die für die Ausregelung notwendigen Kraftstoffteilmengen eingespritzt werden. Auch hier zeigt sich der Vorteil einer Kraftstoffeinspritzung im Bereich der Einlaßebene der Zylinder, da durch die Abdekkung der Einspritzdüsen durch den Kolben während der Verbrennung keine übermäßige Aufheizung der Düsen erfolgt und somit auch keine Kühlung über die Kraftstoffeinspritzmenge notwendig ist und dementsprechend auch geringe Kraftstoffmengen eingespritzt werden können.

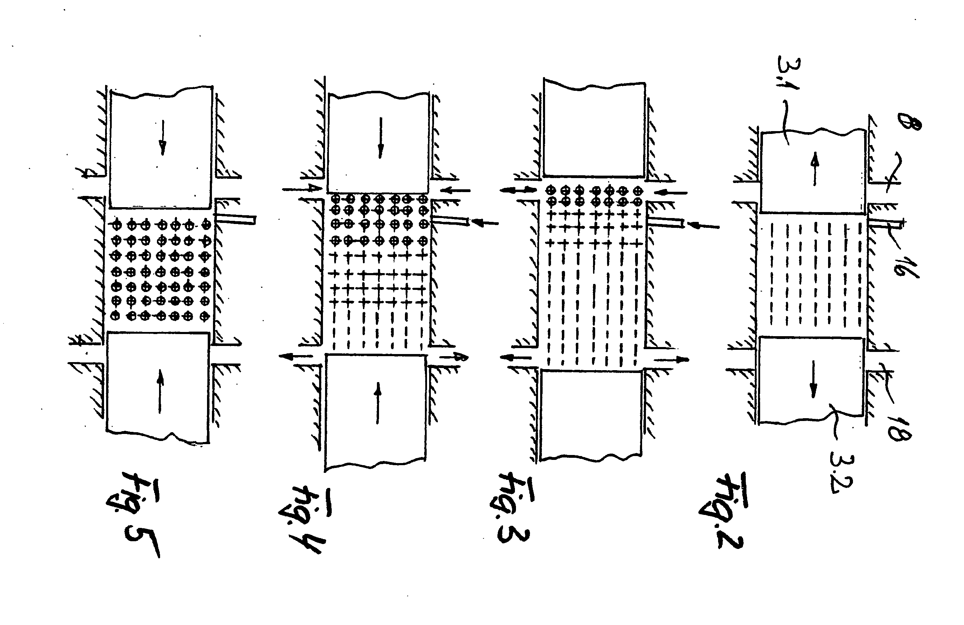

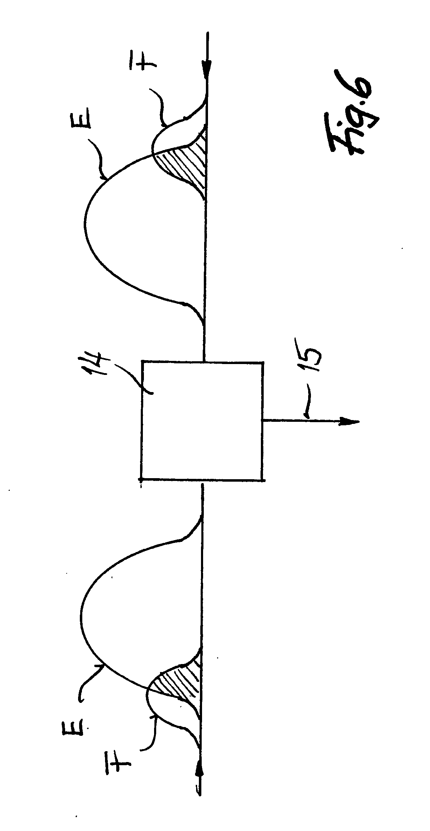

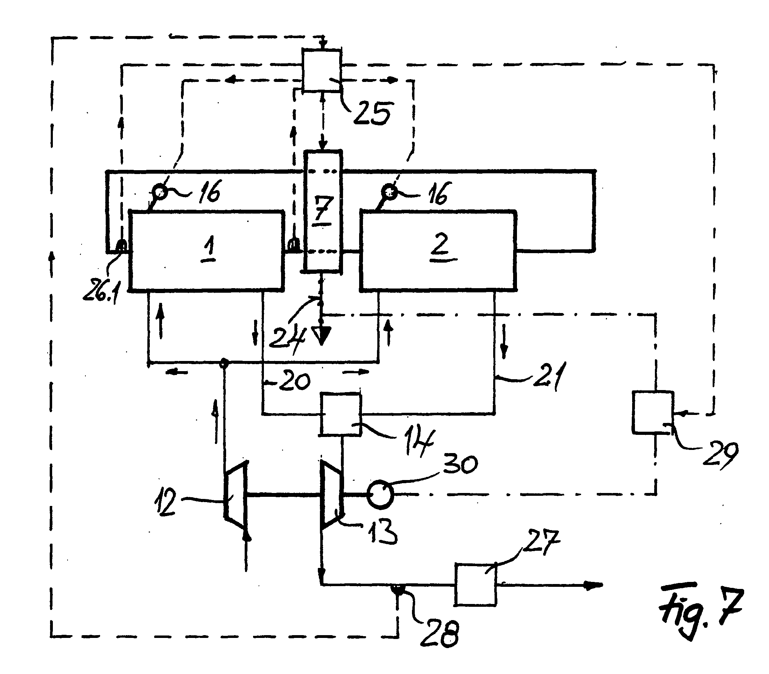

Der vorstehend beschriebene Spülvorgang wird nachfolgend in seinem Ablauf anhand der Fig. 2, 3, 4 und 5 schematisch für den Zylinder 1 des Ausführungsbeispieles gem. Fig. 1 dargestellt und beschrieben, so daß hinsichtlich Aufbau und Funktion auf die zugehörige Beschreibung zu Fig. 1 verwiesen werden kann.

Fig. 2 zeigt die beiden Kolben 3.1 und 3.2 in der Bewegung kurz vor Ende des Expansionshubes. Das Abgas ist hierbei durch Striche dargestellt.

Bereits beim Überfahren der Lufteinlaßöffnungen 8 durch den Kolben 3.1 und der Auslaßöffnungen 18 durch den Kolben 3.2 werden diese geöffnet, so daß die über den Lader 12 zugeführte Frischluft in den Zylinderraum 1 eingepreßt wird. Die Frischluft ist hierbei durch Kreuze gekennzeichnet. In Fig. 3 sind die Kolben in der unteren Totpunktstellung zum Zeitpunkt der Bewegungsumkehr dargestellt. Zu diesem Zeitpunkt beginnt die Kraftstoffzufuhr. Der Kraftstoff wird über die Einspritzdüse 16 gegen den Kolbenboden 3.3 eingespritzt, so daß sich eine intensive Vermischung mit der weiterhin zuströmenden Frischluft ergibt und ein weitgehend homogenes Kraftstoff-Luft-Gemisch bildet wird, das hier durch das Symbol "Kreuz im Kreis" gekennzeichnet ist.

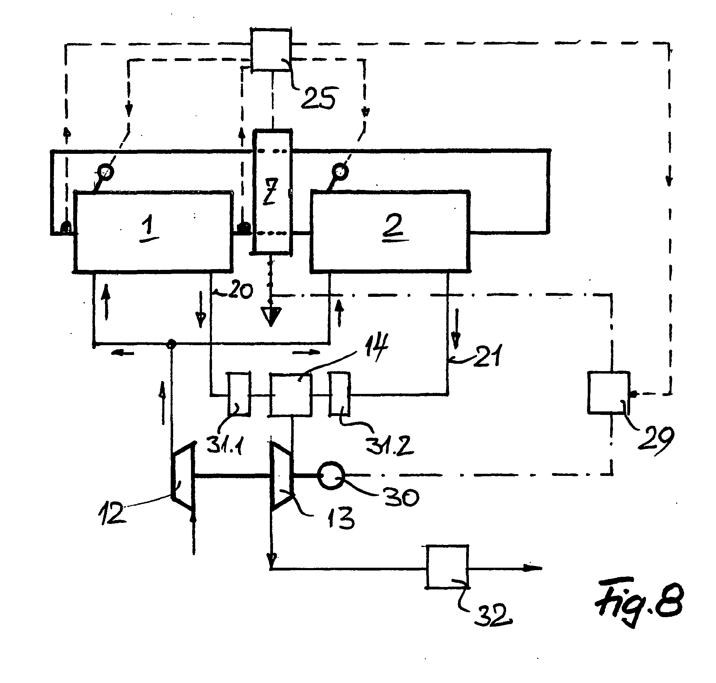

Durch den Spülvorgang wird soviel Frischluft in den Zylinderinnenraum eingedrückt, daß kurz bevor durch die beiden Kolben 3.1 bzw. 3.2 die Lufteinlaßöffnung 8 und die Auslaßöffnung 18 verschlossen wird, eine geringe Menge Frischluft noch hinter dem verdrängten Abgas in die Abgasleitung ausgeschoben wird. Sobald die Einlaßöffnung 8 und die Auslaßöffnung 18 wieder verschlossen sind, erfolgt, wie in Fig. 5 dargestellt, der Kompressionsvorgang, mit dem das Kraftstoff-Luft-Gemisch komprimiert und entweder durch Selbstzündung oder durch Fremdzündung bei Erreichen des "kritischen" Kompressionsverhältnisses gezündet wird.

Die Tatsache, daß es durch die Längsdurchströmung des Zylinderinnenraumes beim Spülvorgang möglich ist, in die Abgasleitung noch eine geringe Menge Frischluft auszuschieben, ist für die nachstehend noch näher erläuterte Abgasbehandlung von Vorteil. Wie in Fig. 6 schematisch dargestellt, werden hierzu zweckmäßigerweise die beiden Auslaßkanalanordnungen 20 bzw. 21 in einer Mischeinrichtung 14 zusammengeführt, aus der dann das Abgas über eine Zuleitung 15 zur Abgasturbine 13 abgeführt wird.

Wie vorstehend beschrieben und in Fig. 6 schematisch dargestellt, wird jeweils beim Spülvorgang zunächst das Abgas E in die Auslaßkanalanordnung ausgeschoben, der dann eine geringe Frischluftmenge F folgt, die im Grenzbereich sich mit dem Abgas bereits vermischt. Wie in Fig. 6 angedeutet, gelangt das Abgas aus den beiden Zylindern jeweils in gesonderten und entsprechend dem Arbeitstakt mit Abstand aufeinanderfolgenden Schüben in die Mischeinrichtung 14. In der Mischeinrichtung kann auch die Druckpulsation des Abgasstroms abgebaut werden.

Bei entsprechender Einstellung der Kraftstoffzufuhr über die Regeleinrichtung 25 weist das Abgas E ein Luftverhältnis von etwa Lambda = 0,9 auf. Über eine entsprechende Regelung des Ladedruckes kann nun erreicht werden, daß die beim Spülvorgang noch in die Auslaßkanalanordnungen 20 bzw. 21 ausgespülten Frischluftmengen etwa 10% der ausgeschobenen Abgasmenge ausmachen, so daß in der Mischeinrichtung 14 ein Abgas mit einem Luftverhältnis von Lambda = 1,0 vorhanden ist, wie es beispielsweise für eine Abgasreinigung mittels eines geregelten 3-Wege-Katalysators erforderlich ist.

In Fig. 7 und Fig. 8 sind Schaltungsanordnungen für eine erfindungsgemäße Brennkraftmaschine mit Abgasreinigung dargestellt. Die Brennkraftmaschine ist in ihren Einzelteilen nur schematisch wiedergegeben ist, so daß auf die Beschreibung zur Fig. 1 verwiesen werden kann.

Fig. 7 zeigt eine Schaltungsanordnung für eine Abgasreinigung über einen geregelten 3-Wege-Katalysator 27, dem das Abgas aus der Abgasturbine 13 zugeführt wird. Das durch die Mischeinrichtung 14 geführte durchmischte Abgas-Luft-Gemisch wird in der Abgasturbine 13 weiter homogenisiert, so daß praktisch ein Abgas-Luft-Gemisch mit einem Luftverhältnis von Lambda 1,0 vorliegt, wenn die Kraftstoffzufuhr entsprechend eingeregelt ist.

Über eine Lambdasonde 28 wird in üblicher Weise das Luftverhältnis im Abgas überwacht, wobei der Meßwert der Regeleinrichtung 25 zugeführt wird.

Da bei einer derartigen Zweitakt-Freiflug-Gegenkolben-Brennkraftmaschine der vorstehend beschriebenen Art kein Zwangsführung der sich gegeneinander bewegenden Kolben erfolgt, ergibt sich eine sehr komplexe Regelung, bei der in der Regeleinrichtung 25 neben der vom Energiewandler 7 abgeforderten Last 24 auch die Position und Bewegungsgeschwindigkeit der Kolben und das Luftverhältnis im Abgas überwacht werden muß. Die "Führungsgröße" für die Kraftstoffzufuhr über die Einspritzdüsen 16 ist die über den Energiewandler 7 abgeforderte Last 24 und bis zu einem gewissen Grade das "Ausbalancieren" des durch die freie Kolbenbewegung sich frei einstellenden Kompressionsverhältnisses.

Um nun bei einer durch die Lastabnahme vorgegebenen Kraftstoffzufuhr für das Abgas vor dem 3-Wege-Kataylsator 27 das Luftverhältnis einhalten zu können, kann zusätzlich über einen entsprechenden Hilfsregler 29 die Abgasturbine 13 und damit der Lader 12 mit Hilfe eines auch als Generator betreibbaren Elektromotors 30 angetrieben oder abgebremst werden. Die Stromversorgung für den Elektromotor 30 wird bei dem hier dargestellten Ausführungsbeispiel eines elektrischen Generators als Energiewandler 7 der vom Energiewandler 7 gelieferten elektrischen Energie entnommen (Antrieb) oder wieder eingespeist (Bremse). Bei anderen Arten von Energiewandlern kann die Versorgung des Motors 30 mit elektrischer Energie über eine Hilfsstromquelle erfolgen.

In Fig. 8 ist eine Brennkraftmaschine gem. Fig. 1 mit einer anderen Form einer Abgaskatalysatoreinrichtung dargestellt. Hierbei ist jeweils in den beiden Abgaskanalanordnungen 20 und 21 der beiden Zylinder ein NOx-Katalysator 31.1 und 31.2 angeordnet, dessen Ausgang jeweils in die Mischeinrichtung 14 ausmündet. Das in der Mischeinrichtung 14 und der nachgeschalteten Abgasturbine 13 durchmischte Gas wird dann einem Oxidationskatalysator 32 zugeführt, in dem noch die im gesamten Abgasstrom enthaltenen Anteile an Kohlenwasserstoffen und Kohlenmonoxid oxidiert werden.

Auch bei dieser Anordnung wird entsprechend den Fig.1 bis 6 durch den Spülvorgang in die beiden NOx-Katalysatoren 31.1 und 31.2 Abgas und nachfolgend eine entsprechend geringe Frischluftmenge eingeführt. Eine genaue Einregelung des Luftverhältnisses auf Lambda = 1 in den Abgaskanalanordnungen ist hierbei nicht erforderlich, da die NOx-Katalysatoren schnell genug reagieren, um einen etwa vorhandenen Luftüberschuß abzubauen, so daß in die Mischeinrichtung 14 ein Abgas mit einem Luftverhältnis von etwa Lambda > 1,0 einströmt und für die Oxidation im Oxidationskatalysator 32 zur Verfügung steht.

Die vorstehende Beschreibung der Abgasverhältnisse mit ihrer Abgasführung und Abgasreinigung lassen erkennen, daß über die beschriebenen Regelungsmöglichkeiten Abgasstrategien entwikkelt werden können, die auch eine verhältnismäßig schnelle Reaktion auf wechselnde Lastfälle ermöglichen. Eine derartige Brennkraftmaschine mit nachgeschaltetem Energieumwandler wird vorzugsweise in einem konstanten Betriebszustand betrieben, so daß über die Regeleinrichtung eine Änderung der Kraftstoffzufuhr und eine Einflußnahme auf das Luftverhältnis Lambda im Abgas nur bei einer Änderung der Lastabnahme, beispielweise einem Wechsel von Vollast auf Teillast und umgekehrt vorgenommen werden muß.

## Patentansprüche

1. Zwei-Zylinder-Zwei-Takt-Freiflugkolben-Brennkraftmaschine mit wenigstens zwei gleichachsig hintereinander angeordneten, abwechselnd befeuerten Zylindern (1, 2), die jeweils mit einer Kraftstoffzufuhr (16, 17) in Verbindung stehen und in denen jeweils ein gegenläufig hin und her bewegbares Kolbenpaar (3, 4) vorgesehen ist, das jeweils im Zylinder (1,2 ) einen Brennraum begrenzt, wobei die sich jeweils gleichsinnig bewegenden Kolben (3.1, 4.2; 3.2, 4.1) starr miteinander verbunden sind und über ihre Verbindungen (5, 6) mit einem Energiewandler (7) in Wirkverbindung stehen, wobei für wenigstens ein Kolbenpaar (3) eine Sensorik (26) vorgesehen ist, über die Daten der Position, Bewegung, Arbeitsfrequenz und Geschwindigkeit der Kolben (3.1, 3.2) erfaßt und eine der Sensorik (26) zugeordnete Regeleinrichtung (25) zur Regelung des Betriebs nach den erfaßten Daten vorgesehen ist, wobei ferner jeder Zylinder (1, 2) an einem Ende mit mehreren, in wenigstens einer Reihe auf seinen Umfang verteilten, eine Einlaßebene (8, 9) bildenden Einlaßöffnungen (8.1, 8.2; 9.1, 9.2) versehen ist, die mit einer Einlaßkanalanordnung (10, 11) in Verbindung stehen, und am anderen Ende mit mehreren auf den Umfang verteilten Auslaßöffnungen (18, 19) versehen ist, die mit einer Abgaskanalanordnung (20, 21) in Verbindung stehen und wobei die Kraftstoffzufuhr (16, 17) zu den Zylindern (1, 2) jeweils im Bereich der Einlaßebene (8, 9) ausmündet.

2. Brennkraftmaschine nach Anspruch 1, **dadurch gekennzeichnet, daß** wenigstens zwei Reihen, eine Einlaßebene (8) bildende Einlaßöffnungen vorgesehen sind, wobei die vom Kolben (3.1, 4.1) jeweils beim Arbeitshub zuerst geöffneten Einlaßöffnungen (8.1, 9.1) eine erste Einlaßebene und die bei gleicher Bewegungsrichtung danach geöffneten Einlaßöffnungen (8.2, 9.2) eine zweite Einlaßebene bilden, so daß die Kraftstoffzufuhr (16, 17) mit der Luftzufuhr wenigstens einer der Einlaßebenen zugeordnet ist.

3. Brennkraftmaschine nach Anspruch 2, **dadurch gekennzeichnet, daß** die Kraftstoffzufuhr (16, 17) mit einer zur Einlaßebene (8, 9) führenden Kanalanordnung (10, 11) in Verbindung steht, die außerhalb des Zylinders vorgesehen ist.

4. Brennkraftmaschine nach einem der Ansprüche 1 bis 3, **dadurch gekennzeichnet, daß** die Kraftstoffzufuhr im Bereich wenigstens einer Einlaßöffnung wenigstens einer Einlaßebene (8, 9) ausmündet.

5. Brennkraftmaschine nach einem der Ansprüche 1 bis 4, **dadurch gekennzeichnet, daß** die Kraftstoffzufuhr wenigstens einen Vergaser aufweist.

6. Brennkraftmaschine nach einem der Ansprüche 1 bis 5, **dadurch gekennzeichnet, daß** die Kraftstoffzufuhr wenigstens eine ansteuerbare Einspritzdüse (16, 17) aufweist.

7. Brennkraftmaschine nach einem der Ansprüche 1 bis 6, **dadurch gekennzeichnet, daß** die Kraftstoffzufuhr wenigstens eine unmittelbar in den Brennraum ausmündende Einspritzdüse (16, 17) aufweist.

8. Brennkraftmaschine nach Anspruch 7, **dadurch gekennzeichnet, daß** die Einspritzdüse (16, 17) vor der ersten Einlaßebene (8, 9) in den Brennraum ausmündet.

9. Brennkraftmaschine nach einem der Ansprüche 1 bis 8, **dadurch gekennzeichnet, daß** die Strahlachse der Einspritzdüse (16, 17), bezogen auf die Zylinderachse, gegen den ersten Kolben (3.1, 4.1) geneigt ausgerichtet ist.

10. Brennkraftmaschine nach einem der Ansprüche 1 bis 9, **dadurch gekennzeichnet, daß** die Luftzufuhreinrichtung wenigstens einen Lader (12), vorzugsweise einen Abgasturbolader aufweist.

11. Brennkraftmaschine nach einem der Ansprüche 1 bis 10, **dadurch gekennzeichnet, daß** die Auslaßkanalanordnungen (20, 21) mit einer Abgaskatalysatoreinrichtung in Verbindung stehen.

12. Brennkraftmaschine nach einem der Ansprüche 1 bis 11, **dadurch gekennzeichnet, daß** die Auslaßkanalanordnungen (20, 21) eine Mischeinrichtung (14) zur Durchmischung der aus den beiden Zylindern abgeführten Abgase aufweist.

13. Brennkraftmaschine nach Anspruch 11 und 12, **dadurch gekennzeichnet, daß** der Mischeinrichtung (14) ein NOx-Katalysator (31.1, 31.2) vorgeschaltet ist.

14. Brennkraftmaschine nach einem der Ansprüche 11 bis 13, **dadurch gekennzeichnet, daß** der Mischeinrichtung (14) ein Oxidationskatalysator (32) nachgeschaltet ist.

15. Brennkraftmaschine nach einem der Ansprüche 11 und 12, **dadurch gekennzeichnet, daß** der Mischeinrichtung (14) ein geregelter 3-Wege-Katalysator (27) nachgeschaltet ist.

## Claims

1. A twin-cylinder two-stroke free piston internal combustion engine comprising at least two alternately actuated cylinders (1, 2) arranged in series on a common axis, which are each connected to a fuel supply means (16, 17) and in which in each case a pair of pistons (3, 4) movable back and forth in opposite directions is provided, which in each case define a combustion chamber in the cylinder (1, 2), the pistons (3.1, 4.2; 3.2, 4.1) moving in each case in the same direction being rigidly connected together and being in an operative connection via their connection means (5, 6) with an energy converter (7), with a sensor system (26) being provided for at least one piston pair (3), via which system data on the position, movement, operating frequency and speed of the pistons (3.1, 3.2) is detected and a closed-loop control means (25) associated with the sensor system (26) being provided for controlling the operation according to the detected data, furthermore each cylinder (1, 2) being provided at one end with a plurality of inlet openings (8.1, 8.2; 9.1, 9.2) which define an inlet plane (8, 9) distributed in at least one row on its periphery, which openings communicate with an inlet duct arrangement (10, 11), and at the other end with a plurality of outlet openings (18, 19) distributed on the periphery, which communicate with an exhaust duct arrangement (20, 21), and the fuel supply means (16, 17) to the cylinders (1, 2) opening out in each case in the region of the inlet plane (8, 9).

2. An internal combustion engine according to Claim 1, **characterised in that** at least two rows of inlet openings defining an inlet plane (8) are provided, the inlet openings (8.1, 9.1) first opened by the piston (3.1, 4.1) in each case during the working stroke forming a first inlet plane and the inlet openings (8.2, 9.2) opened thereafter in the same direction of movement forming a second inlet plane, so that the fuel supply means (16, 17) is associated with the air supply of at least one of the inlet planes.

3. An internal combustion engine according to Claim 2, **characterised in that** the fuel supply means (16, 17) communicates with a duct arrangement (10, 11) leading to the inlet plane (8, 9), which arrangement is provided outside the cylinder.

4. An internal combustion engine according to one of Claims 1 to 3, **characterised in that** the fuel supply means opens out in the region of at least one inlet opening of at least one inlet plane (8, 9).

5. An internal combustion engine according to one of Claims 1 to 4, **characterised in that** the fuel supply means comprises at least one carburettor.

6. An internal combustion engine according to one of Claims 1 to 5, **characterised in that** the fuel supply means comprises at least one actuatable injection nozzle (16, 17).

7. An internal combustion engine according to one of Claims 1 to 6, **characterised in that** the fuel supply means comprises at least one injection nozzle (16, 17) which opens directly into the combustion chamber.

8. An internal combustion engine according to Claim 7, **characterised in that** the injection nozzle (16, 17) opens into the combustion chamber ahead of the first inlet plane (8, 9).

9. An internal combustion engine according to one of Claims 1 to 8, **characterised in that** the spraying axis of the injection nozzle (16, 17) is inclined towards the first piston (3.1, 4.1), relative to the cylinder axis.

10. An internal combustion engine according to one of Claims 1 to 9, **characterised in that** the air supply means comprises at least one charger (12), preferably an exhaust gas turbocharger.

11. An internal combustion engine according to one of Claims 1 to 10, **characterised in that** the outlet duct arrangements (20, 21) communicate with an exhaust gas catalytic converter means.

12. An internal combustion engine according to one of Claims 1 to 11, **characterised in that** the outlet duct arrangements (20, 21) comprise a mixing means (14) for thoroughly mixing the exhaust gases removed from the two cylinders.

13. An internal combustion engine according to one of Claims 11 and 12, **characterised in that** the mixing means (14) is preceded by an NOₓ catalytic converter (31.1, 31.2).

14. An internal combustion engine according to one of Claims 11 to 13, **characterised in that** the mixing means (14) is succeeded by an oxidation catalytic converter (32).

15. An internal combustion engine according to one of Claims 11 and 12, **characterised in that** the mixing means (14) is succeeded by a controlled 3-way catalytic converter (27).

## Revendications

1. Moteur à combustion interne à deux cylindres, à deux temps et à pistons à course libre, comprenant au moins deux cylindres actionnés alternativement qui sont disposés l'un derrière l'autre sur le même axe (1, 2) et en liaison respectivement avec une alimentation en carburant (16, 17), dans lesquels une paire de pistons (3, 4) est respectivement mobile en opposition dans un mouvement de va-et-vient et délimite respectivement une chambre de combustion dans le cylindre (1, 2), dans lequel respectivement les pistons (3.1, 4.2 ; 3.2, 4.1) qui se déplacent dans le même sens sont reliés ensemble de manière rigide et sont, par leurs liaisons (5, 6), en liaison mécanique avec un convertisseur d'énergie (7), dans lequel des capteurs (26) sont prévus pour au moins une paire de pistons (3) pour saisir des données de position, de mouvement, de fréquence de travail et de vitesse des pistons (3.1, 3.2) et dans lequel un dispositif de régulation (25) associé aux capteurs (26) est prévu pour réguler le fonctionnement selon les données détectées, dans lequel chaque cylindre (1, 2) est en outre disposé à une extrémité de plusieurs orifices d'admission (8.1, 8.2 ; 9.1, 9.2) répartis sur sa périphérie dans au moins une rangée et formant un plan d'admission (8, 9), lesquels orifices sont en liaison avec un agencement de conduite d'admission (10, 11), et dispose à l'autre .extrémité de plusieurs orifices d'échappement (18, 19) répartis sur la périphérie qui sont en liaison avec un agencement de conduite d'échappement (20, 21), et dans lequel l'alimentation en carburant (16, 17) vers les cylindres (1, 2) débouche respectivement dans la zone du plan d'admission (8, 9).

2. Moteur à combustion interne selon la revendication 1, **caractérisé en ce qu'**il comprend au moins deux rangées d'orifices d'admission formant un plan d'admission (8), les orifices d'admission (8.1, 9.1) d'abord ouverts respectivement par le piston (3.1, 4.1) lors d'une course de travail formant un premier plan d'admission et les orifices d'admission (8.2, 9.2) ouverts ensuite dans la même direction de déplacement formant un deuxième plan d'admission de sorte que l'alimentation en carburant (16, 17) soit associée à l'alimentation en air d'au moins un des plans d'admission.

3. Moteur à combustion interne selon la revendication 2, **caractérisé en ce que** l'alimentation en carburant (16, 17) est en liaison avec un agencement de conduite (10, 11) conduisant au plan d'admission (8, 9), qui est prévu à l'extérieur du cylindre.

4. Moteur à combustion interne selon l'une des revendications 1 à 3, **caractérisé en ce que** l'alimentation en carburant débouche dans la zone d'au moins un orifice d'admission d'au moins un plan d'admission (8, 9).

5. Moteur à combustion interne selon l'une des revendications 1 à 4, **caractérisé en ce que** l'alimentation en carburant présente au moins un carburateur.

6. Moteur à combustion interne selon l'une des revendications 1 à 5, **caractérisé en ce que** l'alimentation en carburant présente au moins un injecteur (16, 17) qui peut être commandé.

7. Moteur à combustion interne selon l'une des revendications 1 à 6, **caractérisé en ce que** l'alimentation en carburant présente au moins un injecteur (16, 17) débouchant directement dans la chambre de combustion.

8. Moteur à combustion interne selon la revendication 7, **caractérisé en ce que** l'injecteur (16, 17) débouche dans la chambre de combustion devant le premier plan d'admission (8, 9).

9. Moteur à combustion interne selon l'une des revendications 1 à 8, **caractérisé en ce que** l'axe de jet de l'injecteur (16, 17) est incliné vers le premier piston (3.1, 4.1) par rapport à l'axe des cylindres.

10. Moteur à combustion interne selon l'une des revendications 1 à 9, **caractérisé en ce que** le système d'alimentation en air présente au moins un compresseur (12), de préférence un turbocompresseur.

11. Moteur à combustion interne selon l'une des revendications 1 à 10, **caractérisé en ce que** les agencements de conduite d'échappement (20, 21) sont liés à un système de catalyseur de gaz d'échappement.

12. Moteur à combustion interne selon l'une des revendications 1 à 11, **caractérisé en ce que** les agencements de conduite d'échappement (20, 21) présentent un dispositif de mélange (14) pour mélanger les gaz d'échappement des deux cylindres.

13. Moteur à combustion interne selon les revendications 11 et 12, **caractérisé en ce qu'**un catalyseur de NOx (31.1, 31.2) est raccordé en amont du dispositif de mélange (14).

14. Moteur à combustion interne selon l'une des revendications 11 à 13, **caractérisé en ce qu'**un catalyseur d'oxydation (32) est raccordé en aval du dispositif de mélange (14).

15. Moteur à combustion interne selon l'une des revendications 11 et 12, **caractérisé en ce qu'**un catalyseur régulé à 3 voies (27) est raccordé en aval du dispositif de mélange (14).
